# EUROPEAN PATENT APPLICATION

(11) **EP 4 685 345 A1**
(43) Date of publication of application: **28.01.2026**
(21) Application number: 25183108.7
(22) Date of filing: 16.06.2025
(51) Int. Cl.: F02C 7/32, F02C 7/36

(54) **ACCESSORY GEARBOX WITH ACCESSORIES WITH A STACKED CONFIGURATION**

(30) Priority: 22.07.2024 US 202418779286
(71) Applicant: The Boeing Company, Arlington, VA 22202 (US)
(72) Inventor: CAMPBELL, Lowell Bruce, Arlington, 22202 (US); MACKIN, Steve, Arlington, 22202 (US)
(74) Representative: Boult Wade Tennant LLP

(57) **Abstract**

An assembly that is operatively connected with a connection assembly (30) to a turbine engine (110) of an aircraft (100). The assembly includes an accessory gearbox (20) with a body (21) configured to be connected to the connection assembly and mounting pads (24) spaced about the body. A first accessory (200a) is mounted to the body at a first one of the mounting pads. A second accessory (200b) is mounted to the first accessory with the first accessory and the second accessory in a stacked arrangement.

## Description

### TECHNOLOGICAL FIELD

The present disclosure relates generally to the field of aircraft and, more specifically, to the present disclosure relates to the field of accessory gearbox configurations in aircraft.

### BACKGROUND

Aircraft engines such as gas turbine engines include an accessory gearbox. The accessory gear box is powered by a shaft that links to the turbine and compressor of the engine. The accessory gearbox in turn drives engine accessories such as but not limited to various generators, pumps, and compressors. Another accessory is a starter for starting the engine. The accessory gearbox includes mounting pads for mounting the accessories. The mounting pads are spaced about on the accessory gearbox and configured to connect to the accessories to be operatively connected to the engine.

Currently, accessory gearboxes include a separate mounting pad for each accessory. The accessory gearbox may include a first mounting pad for the air starter unit and separate second mounting pad for an electrical generator unit. However, this configuration with the separate mounting locations on the accessory gearbox requires a relatively large amount of space that is often not available at the engine.

Another issue is the inability to accommodate additional accessories that are needed to upgrade/change the aircraft. For example, an additional generator maybe needed to provide additional electrical power. An issue with adding one or more accessories to the accessory gearbox is the lack of physical space. The physical space is relatively small and/or located at a position that is not applicable for the accessory. It is difficult or not possible in many instances to connect an additional accessory to the gearbox. Accommodating the additional generator and separating mounting pads increases the size of the accessory gearbox which could require a redesign of the accessory gearbox and require further downstream revisions to the engine and/or accessories.

### SUMMARY

There is described herein an assembly that is operatively connected with a connection assembly to a turbine engine of an aircraft. The assembly comprises an accessory gearbox comprising a body configured to be connected to the connection assembly. Mounting pads are spaced about the body. A first accessory is mounted to the body at a first one of the mounting pads. A second accessory is mounted to the first accessory. The first accessory and the second accessory are in a stacked arrangement.

Optionally, a gear assembly is connected to the first accessory and to the second accessory and the gear assembly enables the first accessory and the second accessory to operate at different speeds.

Optionally, the gear assembly comprises a planetary gear and a sprag gear.

Optionally, a drive shaft extends outward from the second accessory and the drive shaft extends through the first accessory and is operatively connected to the body.

Optionally, the first accessory comprises a central opening with a central axis and the drive shaft comprises an axis with the central axis and the axis being coincident.

Optionally, a third accessory is mounted to the body at a second one of the mounting pads with the second mounting pad spaced apart on the body from the first mounting pad.

Optionally, the second accessory is stacked on the first accessory and positioned away from the body.

Optionally, the first accessory is a starter to start the turbine engine and the second accessory is a generator.

Optionally, the first accessory comprises a first side that faces towards the accessory gearbox and an opposing second side that faces away from the accessory gearbox with the second accessory connected to the second side of the first accessory.

Optionally, the first accessory comprises a central opening and the second accessory comprises an outwardly extending shaft with the shaft extending through the central opening.

There is described herein an assembly that is operatively connected to a turbine engine of an aircraft. The assembly comprises an accessory gearbox comprising a body with a plurality of mounting pads. A starter is mounted to the accessory gearbox at a first one of the mounting pads. A generator is connected to the starter and spaced away from the first mounting pad. The generator is operatively mounted through the starter to the first mounting pad.

Optionally, a gear assembly is connected to each of the starter and the generator.

Optionally, the generator comprises a drive shaft that extends through the starter and is operatively connected to the accessory gearbox.

Optionally, the starter comprises a radial turbine with a central opening and with the drive shaft extending through the central opening.

Optionally, the gear assembly comprises a planetary gear with a sun gear that is connected to the radial turbine and a sprag gear that is connected to the drive shaft and with a planetary carrier of the planetary gear connected to the sprag gear.

Optionally, the starter comprises a turbine wheel shaft and the generator comprises a drive shaft and wherein the turbine wheel shaft and the drive shaft are coincident.

Optionally, the starter and the generator are configured to operate at different times.

Optionally, the generator is a first generator and further comprising a second generator connected to a second the accessory gearbox at a second one of the mounting pads and with the second generator spaced away from the first generator and the starter.

Optionally, the first generator is a secondary generator comprising an integrated drive generator and the second generator is a primary generator.

There is described herein an assembly that is operatively connected to a turbine engine of an aircraft through a connection assembly. The assembly comprises an accessory gearbox comprises a body with a first face and a second face. A gear assembly is mounted to the body and connected to the connection assembly. A plurality of mounting pads are on the first face of the body with each of the mounting pads comprising a mount to engage with the gear assembly. A starter is mounted to a first one of the mounting pads with the starter comprising a radial turbine and a central opening. A generator is connected to the starter and is spaced away from the first face with the generator comprising a drive shaft that extends through the central opening of the starter and operatively connected to the gear assembly. The starter and the generator are in a stacked arrangement.

The features, functions and advantages that have been discussed can be achieved independently in various examples or may be combined in yet other examples, further details of which can be seen with reference to the following description and the drawings.

### BRIEF DESCRIPTION OF THE DRAWINGS

Figure 1 is an isometric view of an aircraft.
Figure 2 is a schematic diagram of an engine.
Figure 3 is a schematic diagram of a connection assembly that extends between the engine and an accessory gearbox.
Figure 4 is a schematic diagram of an accessory gearbox.
Figure 5 is a schematic diagram of a stacked arrangement of accessories on an accessory gearbox.
Figure 6 is a schematic diagram of a stacked arrangement of accessories on an accessory gearbox.
Figure 7 is a schematic diagram of a stacked arrangement of accessories on an accessory gearbox.
Figure 7A is a schematic diagram of a gear assembly that includes a first gear arrangement and a second gear arrangement.
Figure 8 is a schematic diagram of a stacked arrangement comprising a starter and a generator that are mounted to an accessory gearbox.
Figure 9 is a partial section view of the stacked arrangement of Figure 8.
Figure 10 is a schematic diagram of a gear assembly of the stacked arrangement of Figure 8.

### DETAILED DESCRIPTION

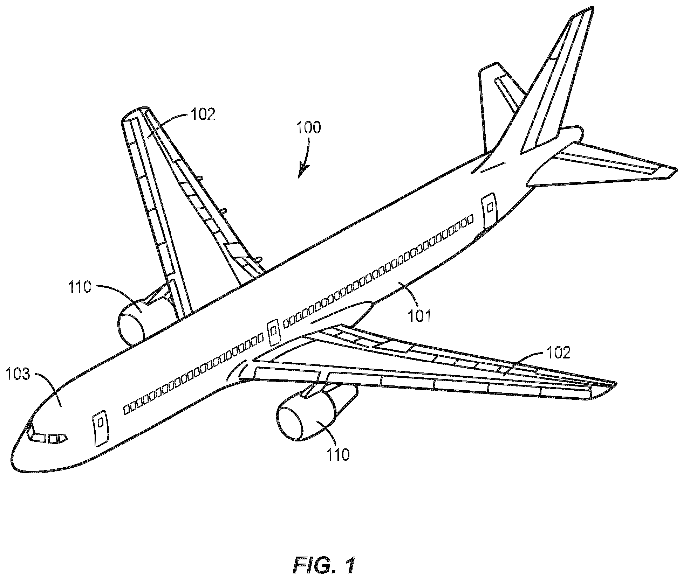

Figure 1 illustrates an example of an aircraft 100. The aircraft 100 includes a fuselage 101 and wings 102. One or more turbine engines 110 are mounted to the wings 102 to propel the aircraft 100. A flight deck 103 is positioned at the front of the fuselage 101 and includes controls that provide for operating the aircraft 100. A rearward section of the fuselage 101 includes an interior space configured to accommodate passengers and/or cargo.

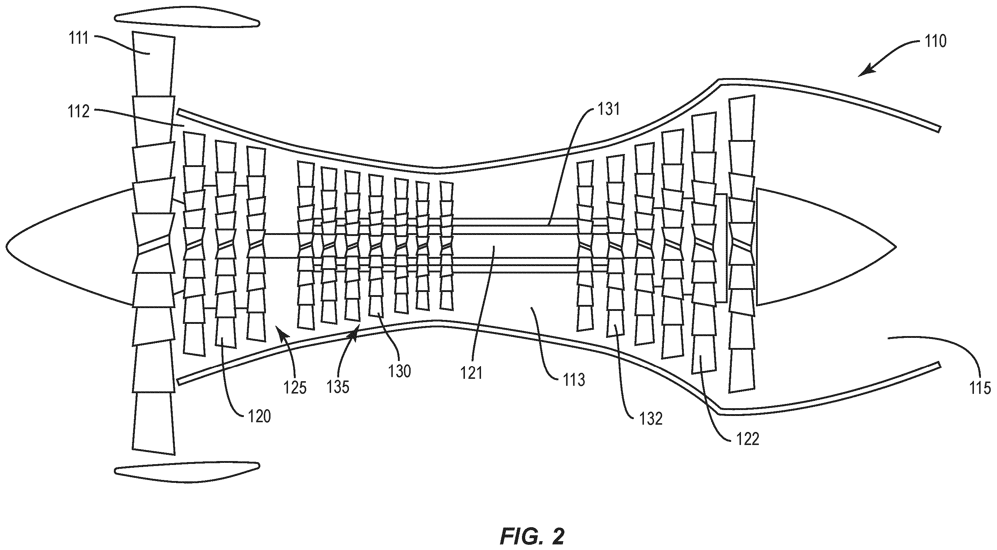

Figure 2 illustrates a schematic diagram of the turbine engine 110. The turbine engine 110 includes a fan 111 that draws air into a fan duct or compressor intake section and into a compressor 112. The compressor 112 includes one or more compressor sections. In some examples as illustrated in Figure 2, the compressor 112 is a dual-axial compressor that includes a low pressure compressor 120 and a high pressure compressor 130. In some examples, the low pressure compressor 120 and the high pressure compressor 130 include various compressor stages that progressively increase the pressure of the air as the air flows from an input section at the fan 111 to a combustion chamber 113.

The low pressure compressor 120 is operatively coupled to a low pressure shaft 121 and the high pressure compressor 130 is operatively coupled to a high pressure shaft 131. The low pressure shaft 121 is further coupled to a low-pressure turbine 122 and the high pressure shaft 131 is coupled to a highpressure turbine 132. In this and certain other examples, the compressor 112 is a dual-axial compressor that includes the two compressors 120, 130. However, in certain other examples, the compressor 112 may include more compressor sections, each having, for example, a turbine and respective shaft. In some examples as illustrated in Figure 2, the shafts 121, 131 are co-linearly aligned with the first shaft 121 positioned within an interior of the second shaft 131.

After exiting the high pressure compressor 130, the highly pressurized air is provided to the combustion chamber 113 where fuel is injected and mixed with the highly pressure air and ignited. The high energy airflow exiting the combustion chamber 113 turns blades of the turbines 122, 132 which are coupled to respective ones of the shafts 121, 131. Rotation of the shafts 121, 131 turns blades of the compressors 120, 130. The heated air is exhausted via a nozzle 115 where it mixes with cool air, provided by the fan 111 that bypasses the engine core to produce forward thrust.

The low pressure components including the low pressure compressor 120, low pressure shaft 121, and low pressure turbine 122 form a low pressure spool 125. The high pressure components including the high pressure compressor 130, high pressure shaft 131, and high pressure turbine 132 form a high pressure spool 135.

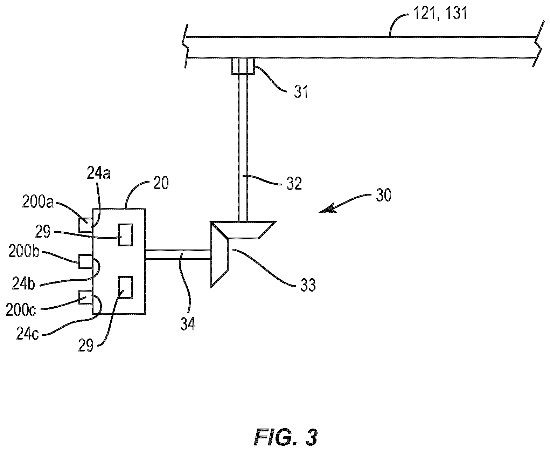

As illustrated in Figure 3, an accessory gearbox 20 is operatively connected to the engine 110. The accessory gearbox 20 includes mounting pads 24 for mounting various accessories. The accessory gearbox 20 also includes a variety of gears and shafts to operatively connect the accessories 200 to the engine 110. Examples of the accessories that receive power through the accessory gearbox 20 include but are not limited to various generators, hydraulic pumps, fuel pumps, starters and cooling fans. A connection assembly 30 having a variety of gears and drive shafts extend between the engine 110 and the accessory gearbox 20. The connection assembly 30 is connected to one or both of the low pressure shaft 121 and the high pressure shaft 131.

In some examples, the connection assembly 30 includes an inlet gearbox 31 connected to the high pressure shaft 131. The inlet gearbox 31 can be located at various positions along the high pressure shaft 131, for example positioning the inlet gearbox 31 positioned in proximity to the fan 111 and within a fan frame hub. The inlet gearbox 31 rotates a radial drive shaft 32. In some examples, the radial drive shaft 32 extends outward from the shaft 114 within a fan frame strut. One or more transfer gearboxes 33 drive a transfer drive shaft 34 that extends into and drives one or more gears 29 and transfer mechanisms within the accessory gearbox 20.

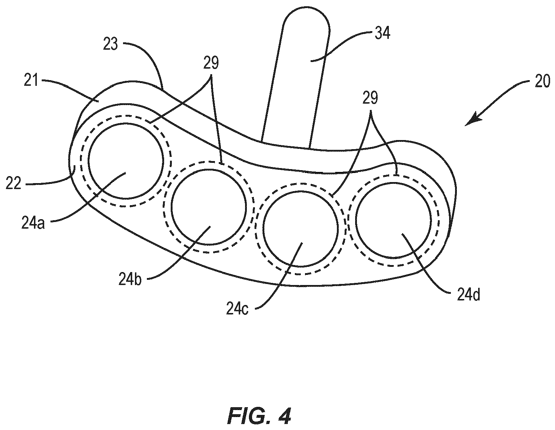

Figure 4 illustrates an accessory gearbox 20 connected to the transfer drive shaft 34. The accessory gearbox 20 includes a body 21 that includes a first face 22 and a second face 23. The size and shape of the body 21 can vary depending upon the engine 110 and the number and positioning of the accessories. Mounting pads 24 are positioned on one or more of the faces 22, 23. Each mounting pad 24 is configured to physically mount to an accessory. In some examples, the mounting pads 24 include a threaded receptacle to threadingly mount to an accessory. Additionally or alternatively, the mounting pads 24 include openings to receive mechanical fasteners to connect the accessory. The different mounting pads 24 can include the same or different shape, size, and mounting structure. Gears 29 are positioned within the interior of the body 21 and configured to transfer power through the transfer drive shaft 34.

An issue with existing systems in the size of the body 21 of the accessory gearbox 20 and number/configuration of mounting pads 24 to mount accessories. The number and positioning of the mounting pads 24 is relatively limited due to the size of the body 21. Further, in an existing design with accessories 200 allocated for each mounting pad 24, the addition of a new accessory 200 requires a re-design of the accessory gearbox 20. In some examples, a re-design is not practical as there is not enough space to accommodate another mounting pad 24 and corresponding accessory 200. In some examples, a re-design of the accessory gearbox 20 requires a larger body 21 which requires a new configuration for the accessory gearbox 20 and may require further downstream revisions to the engine 110 and/or connection assembly 30.

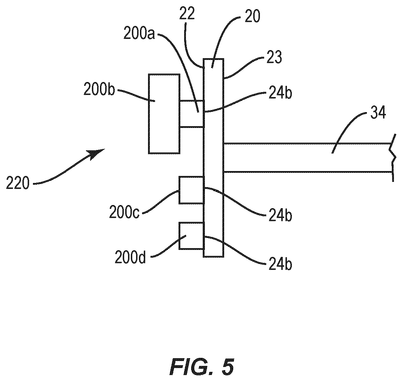

Figure 5 illustrates a structure that enables adding accessories 200 to the accessory gearbox 20 without having to increase the size and the body 21. Two or more of the accessories 200 are in a stacked arrangement 220. The stacked arrangement 220 includes a first accessory 200a connected to the body 21 at a mounting pad 24a. A second accessory 200b is mounted to the first accessory 200a. The second accessory 200b does not directly connect to the body 21 but rather connects through the first accessory 200a. The stacked arrangement 220 of the accessories 200a, 200b extends outward from the body 21 and enables the addition of the accessory 200 on the relatively small body 21. The accessory gearbox 20 includes additional mounting pads 24 for connecting with additional accessories 200.

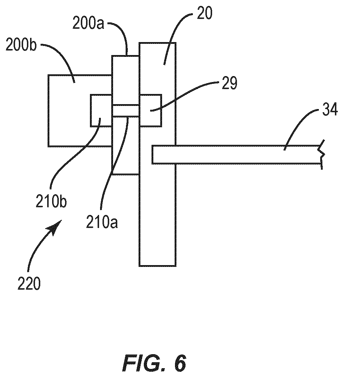

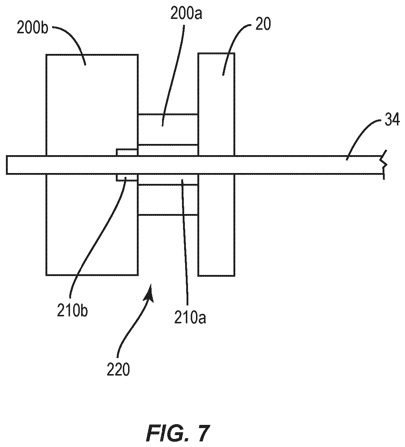

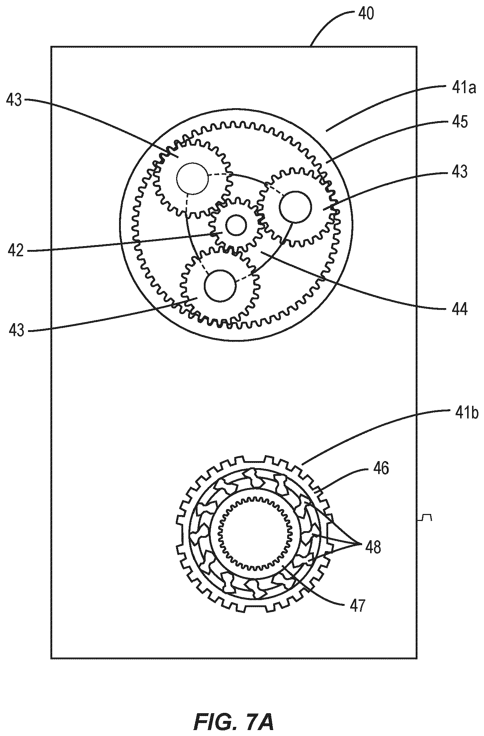

The stacked arrangement 220 is configured to enable power to be transferred between the accessories 200 in the stack and the accessory gearbox 20. In some examples as illustrated in Figure 6, the first accessory 200a includes a first gear configuration 210a that engages with a second gear arrangement 210b in the second accessory 200b. The energy from the transfer drive shaft 34 is transferred to the gears 29 of the accessory gearbox 20. The gear configurations 210 are configured to engage together to operatively connect the accessories 200 to the accessory gearbox 20. In some examples as illustrated in Figure 7, the transfer drive shaft 34 extends into the stack. The accessories 200a, 200b include gear configurations 210a, 210b that engage with the transfer drive shaft 34.

In some examples, a gear assembly 40 is configured to operatively connect the stacked accessories 200 to the transfer drive shaft 34. The gear assembly 40 is configured to enable each of the accessories 200 to perform their particular function regarding transferring power to/from the transfer drive shaft 34. The gear assembly 40 is also configured to disengage the accessories 200 when no longer performing the function. The gear assembly 40 can include a variety of different gear arrangements to enable this operation. In some examples, the gear assembly 40 includes a single gear arrangement. In certain other examples, the gear assembly 40 is two or more gear arrangements that may be positioned together or may be spaced apart. In some examples, the gear assembly 40 includes multiple gear arrangements located at a single position relative to the transfer drive shaft 34. In certain other examples, the gear assembly 40 includes multiple gear arrangements that are spaced apart at different positions relative to the transfer drive shaft 34.

Figure 7A illustrates a gear assembly 40 that includes a first gear arrangement 41a and a second gear arrangement 41b. The first gear arrangement 41a is a planetary gear that includes a sun gear 42, planet gears 43, a planetary carrier 44, and a ring gear 45. The gear assembly 40 also includes a sprag clutch 41b that includes an outer race 46, an inner race 47, and intermediate rollers 48. The sprag clutch 41b is a one-way clutch with the outer race 46 able to drive the inner race 47 but the inner race 47 cannot drive the outer race 46.

The stacked arrangement 220 can include a variety of different configurations that are connected to the accessory gearbox 20. In some examples, the stacked arrangement 220 includes a single stack of accessories 200. In certain other examples, the stacked arrangement 220 includes two or more stacks of accessories. In some examples, the stack includes two accessories 200. In certain other examples, the stack includes three or more accessories 200.

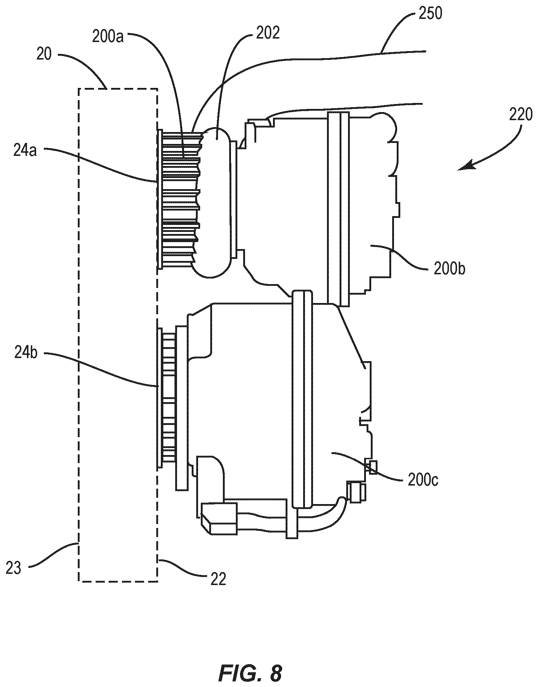

In some examples, like that illustrated in Figures 8, 9, and 10, the stacked arrangement 220 includes a starter 200a and a generator 200b connected at a single mounting pad 24a of an accessory gearbox 20. As illustrated, the stacked arrangement 220 includes the starter 200a mounted to the mounting pad 24a. The generator 200b is mounted to the starter 200a and is positioned outward away from the first face 22 of the accessory gearbox 20. In this and certain other examples, the accessory gearbox 20 also supports a second generator 200c at a second mounting pad 24b. As illustrated, the stacked arrangement 220 enables mounting three accessories 200 to the accessory gearbox 20 within a physical location that could traditionally accommodate just two accessories. In some examples like the example of Figure 8, generator 200c is a primary generator and generator 200b is a secondary generator. In some examples, the secondary generator 200b is an integrated drive generator that produces electrical power to support on-board systems and avionics, such as during emergency situations when main power sources are compromised. In some examples, the stacked arrangement 220 enables both accessories 200a, 200b to be used simultaneously.

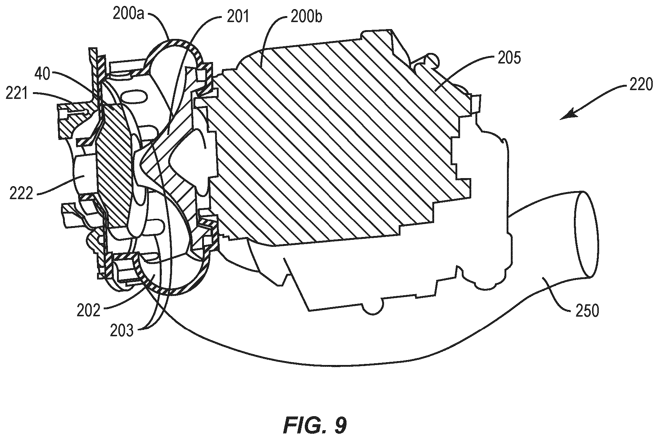

The starter 200a is a radial starter that includes a radial turbine 201. The radial turbine 201 has a smaller height than a traditional axial turbine thus facilitating the stacked arrangement of the accessories 200. The shorter length of the radial design also reduces the overall length of the stacked arrangement 220 which reduces the overhanging moment arm load of the attached generator 200b. An inlet scroll 202 enables air to be delivered to the turbine 201 from one or more sources, including but not limited a ground-operated cart, an auxiliary power unit, or from exhaust from another engine 110 that is already operating. Exhaust holes 203 exhaust the air. The generator 200b includes a body 205 configured to connect to the starter 200a. A shaft 206 extends outward from the body 205. As illustrated in Figure 9, the stacked arrangement 220 includes an interface 221 to connect to the accessory gearbox 20. The interface 221 includes a mating extension configured to be inserted into the body 21, and a flange that extends radially outward to contact against the first face 22. The stacked arrangement 220 also includes a spline connector 222 that connects to the drive shaft 206. Starter inflow duct 250 is shown relative to the stacked arrangement 220.

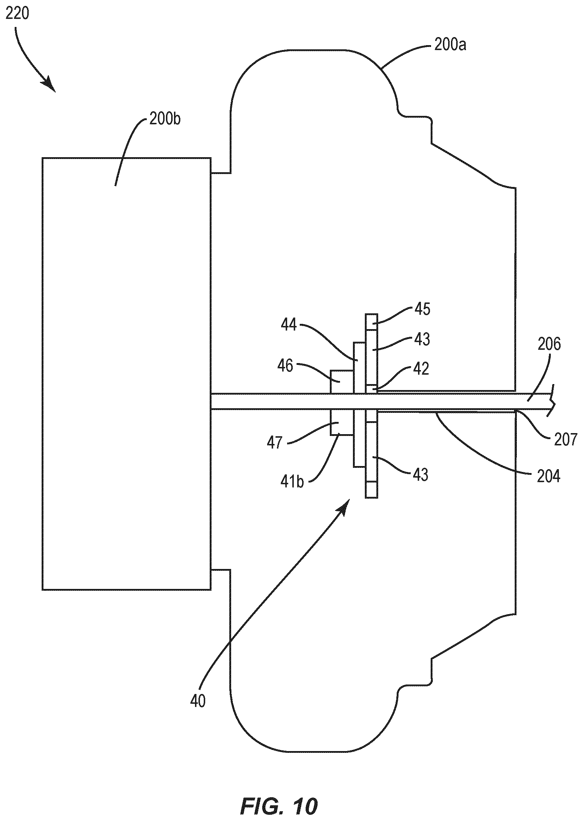

As illustrated in Figure 10, the stacked arrangement 220 includes the drive shaft 206 of the generator 200b extending through the starter 200a. The drive shaft 206 extends through and is concentric with a turbine wheel shaft 204. The starter 200a includes a central opening 207 and the shaft 106 extends through the central opening 207.

The gear assembly 40 engages with the accessories 200a, 200b as illustrated in Figure 10. The inner race 47 of the sprag gear 41b is connected to the drive shaft 206 and the outer race 46 is connected to the planetary carrier 44. The sun gear 42 is connected to the turbine shaft 206. When the turbine is on, the turbine 201 drives the outer race 46 which in turn drives the inner race 47. The inner race 47 in turn drives the drive shaft 206 and connected transfer drive shaft 34. After the engine 110 starts, the transfer drive shaft 34 drives the inner race 47 but the configuration of the sprag clutch enables the outer race 46 to stop because it is not being driven by the inner race 47.

An advantage of the stacked arrangement 220 of the starter 200a and generator 200b is the two components use the same shaft at different times. The starter 200a uses the drive shaft for less than a few minutes to start the engine 110, such as at the beginning of flight operations. The generator 200b then uses the shaft power after the engine 110 is running.

Another advantage is the stacked arrangement 220 avoids adding additional loaded gears in the transfer gearbox 33 and/or inlet gearbox 31. The additional loaded gears could case an increase in oil lubrication pump demand and large bearings to react to the torque load.

The present examples are to be considered in all respects as illustrative and not restrictive, and all changes coming within the meaning of the appended claims are intended to be embraced therein.

## Claims

1. An assembly for connection to a turbine engine of an aircraft, the assembly comprising:
an accessory gearbox (20) comprising:
a body (21) configured for connection to the turbine engine;
mounting pads (24) spaced about the body (21);
a first accessory (200a) mounted to the body (21) at a first one of the mounting pads (24); and
a second accessory (200b) mounted to the first accessory (200a); and
wherein the first accessory (200a) and the second accessory (200b) are in a stacked arrangement.

2. The assembly of claim 1, further comprising a gear assembly (40) connected to the first accessory (200a) and to the second accessory (200b), and wherein:
the gear assembly (40) enables the first accessory (200a) and the second accessory (200b) to operate at different speeds; and, optionally,
the gear assembly (40) comprises a planetary gear and a sprag gear.

3. The assembly of claim 1 or 2, further comprising a drive shaft (206) that extends outward from the second accessory (200b), and wherein:
the drive shaft (206) extends through the first accessory (200a) and is operatively connected to the body (21); and, optionally,
the first accessory (200a) comprises a central opening (207) with a central axis and the drive shaft (206) comprises an axis with the central axis and the axis being coincident.

4. The assembly of any preceding claim, further comprising a third accessory (200c) mounted to the body (21) at a second one of the mounting pads (24b) with the second mounting pad (24b) spaced apart on the body (21) from the first mounting pad (24a).

5. The assembly of any preceding claim, wherein the second accessory (200b) is stacked on the first accessory (200a) and positioned away from the body (21).

6. The assembly of any preceding claim, wherein the first accessory (200a) comprises a first side that faces towards the accessory gearbox (20) and an opposing second side that faces away from the accessory gearbox (20) with the second accessory (200b) connected to the second side of the first accessory (200a).

7. The assembly of any preceding claim, wherein the first accessory (200a) comprises a central opening (207) and the second accessory (200b) comprises an outwardly extending shaft (206) with the shaft (106) extending through the central opening (207).

8. The assembly of any preceding claim, wherein the first accessory (200a) is a starter for starting the turbine engine and the second accessory (200b) is a generator and, optionally, the starter (200a) and the generator (200b) are configured to operate at different times.

9. The assembly of claim 8, wherein:
the starter (200a) is mounted to the accessory gearbox (20) at a first one of the mounting pads (24);
the generator (200b) is connected to the starter (200a) and spaced away from the first mounting pad (24); and
the generator (200b) is operatively mounted through the starter (200a) to the first mounting pad (24).

10. The assembly of claim 9 when dependent upon claim 2, wherein the gear assembly (40) is connected to each of the starter (200a) and the generator (200b).

11. The assembly of claim 10, wherein the generator (200a) comprises a drive shaft (206) that extends through the starter (200a) and is operatively connected to the accessory gearbox (20).

12. The assembly of claim 11, wherein:
the starter (200a) comprises a radial turbine (201) with a central opening (207) and with the drive shaft (206) extending through the central opening (207); and, optionally,
the gear assembly (40) comprises a planetary gear with a sun gear (42) that is connected to the radial turbine (201) and a sprag gear that is connected to the drive shaft (206) and with a planetary carrier (44) of the planetary gear connected to the sprag gear.

13. The assembly of any of claims 9 to 12, wherein the starter (200a) comprises a turbine wheel shaft (204) and the generator (200b) comprises a drive shaft (206) and wherein the turbine wheel shaft (204) and the drive shaft (206) are coincident.

14. The assembly of any of claims 9 to 13, wherein:
the generator (200b) is a first generator;
the assembly further comprises a second generator connected to a second accessory gearbox (20) at a second one of the mounting pads (24) and with the second generator spaced away from the first generator and the starter; and, optionally,
the first generator is a secondary generator comprising an integrated drive generator and the second generator is a primary generator.

15. An aircraft comprising a turbine engine, a connection assembly and the assembly of any preceding claim, wherein the assembly is operatively connected with the connection assembly to the turbine engine and, optionally, the body (21) is configured for connection to the connection assembly.
